# EUROPÄISCHE PATENTSCHRIFT

(11) **EP 0 751 101 B1**
(45) Veröffentlichungstag und Bekanntmachung des Hinweises auf die Patenterteilung: **11.03.1998**
(21) Anmeldenummer: 96109688.0
(22) Anmeldetag: 17.06.1996
(51) Int. Cl.: C03C 25/02, C08J 5/08

(54) **Wässrige Dispersionen, Verfahren zu ihrer Herstellung und ihre Verwendung**
Aqueous dispersions, method for their production and their use
Dispersions aqueuses, méthode pour leur production et leur utilisation

(30) Priorität: 28.06.1995 DE 19523511
(43) Veröffentlichungstag der Anmeldung: 02.01.1997
(73) Patentinhaber: BAYER AG, 51368 Leverkusen (DE); BAYER ANTWERPEN N.V., 2040 Antwerpen (BE)
(72) Erfinder: Kirchmeyer, Stephan, Dr., 51375 Leverkusen (DE); Karbach, Alexander, Dr., 47800 Krefeld (DE); Audenaert, Raymond, Dr., 9220 Hamme (BE)
(74) Vertreter: Steiling, Lothar, Dr.

(56) Entgegenhaltungen:
- EP-A- 0 635 462
- DE-A- 4 305 727
- US-A- 5 130 197

## Beschreibung

Die vorliegende Erfindung betrifft wäßrige Dispersionen, die als Hauptbestandteile modifiziertes Polyolefin enthalten, ein Verfahren zu ihrer Herstellung und ihre Verwendung zur Oberflächenmodifizierung von Feststoffen, insbesondere zur Beschlichtung von Glasfasern.

Es ist bekannt, daß die Eigenschaften von Verbunden aus Glasfasern und Polymeren in hohem Maße von der Scherfestigkeit zwischen Glasfaser und dem die Glasfaser umgebenden Polymeren, dem sog. Matrixpolymeren beeinflußt werden. Die Aufgabe der Glasfaserschlichte besteht darin, diesen Verbund zwischen der Glasfaser und dem Matrixpolymer herzustellen und außerdem die Herstell- und Verarbeitbarkeit der Glasfasern sicherzustellen. Als Schlichten werden Zusammensetzungen aus Wasser, polymeren Bindemitteln (den sog. Filmbildnern), Haftvermittlern, Gleitmitteln, Antistatika und weiteren Hilfsmitteln verwendet, wobei die Rezepturen der Schlichten auf die jeweilige Polymermatrix optimiert werden müssen. Als Bindemittel verwendet man im allgemeinen organische, wasserdispergierbare oder lösliche Polyvinylacetat-, Polyester-, Polyesterepoxid-, Polyurethan-, Polyacrylat-, Polyolefinharze oder deren Mischungen.

In DE-A 4 305 727 werden Schlichten für Polyolefin-Verstärkungs-Glasfasern bestehend aus einem Filmbildner auf der Basis eines Olefinharzes und polyfunktionellen Epoxiden beschrieben.

In EP-A 635 462 werden Schlichten für Verstärkungs-Glasfasern vorgeschlagen, die einen Filmbildner auf der Basis eines säuremodifizierten, mit Alkanolamin neutralisierten Polyolefins, Aminosilan als Haftvermittler und aliphatisches Monoamin als Stabilisator enthalten.

US-A 5 130 197 beschreibt Glasfasern, die mit einer Schlichte, bestehend aus einem Filmbildner auf der Basis eines säuremodifizierten, mit Diethylethanolamin neutralisierten Polyolefins, Aminosilan als Haftvermittler, Dicarbonsäure als Stabilisator und weiteren Filmbildnern, beschlichtet sind.

Die Glasfaserverstärkung von Polyolefinen ist aufgrund der chemischen Inertheit und niedrigen Polarität der Polyolefine grundsätzlich sehr problematisch. Glasfasern besitzen an der Oberfläche eine verhältnismäßig hohe Polarität und sind daher weitgehend unverträglich mit Polyolefinen. Daher werden für Polyolefin geeignete Glasfasern praktisch ausschließlich Polyolefin-Dispersionen (BE 750 649, BE 807 979 und US 3 480 580) als Filmbildner verwendet. Andere, z.B. polyurethanhaltige, vinylacetathaltige oder epoxidhaltige Filmbildner sind dagegen mit Polyolefinen unverträglich und ungeeignet, da sie jegliche Faser/Matrix-Anbindung verhindern. In diesen Fällen weisen die Verbunde aus Glasfasern und Polyolefin mangelhafte mechanische Eigenschaften, wie z.B Zug- und Biegefestigkeit oder Schlagzähigkeit auf.

Es werden jedoch vom Markt Glasfasern gewünscht, die auch zur Verstärkung von Polyolefinen geeignet sind und die im Vergleich zum Stand der Technik verbesserte Eigenschaften, insbesondere verbesserte Zug- und Biegefestigkeiten, der Polyolefinmatrix liefern.

Die Aufgabe bestand daher darin, eine Dispersion zur Verfügung zu stellen, die zur Oberflächenbeschichtung Von Feststoffen, insbesondere zur Beschlichtung von Glasfasern geeignet ist, die die Verträglichkeit zwischen der Feststoffoberfläche und dem Matrixolefin erhöht und dadurch die Verbundeigenschaften verbessert.

Diese Aufgabe konnte überraschenderweise durch eine wäßrige Dispersion, die ein emulgiertes Polyolefin und Metallsalze eines Phosphoresters enthält, gelöst werden. Dies war umso überraschender, da bisher lediglich bekannt war, Metallsalze von Phosphorsäureestern Polyolefinen zuzusetzen, um deren optische Eigenschaften, insbesondere als Folien zu verbessern (T. Haruna, E. Tobita, Annu. Tech. Conf. Soc. Plast. Eng. (1992), p. 2029-2034). Die erfindungsgemäßen wäßrigen Dispersionen verbessern die Verbundeigenschaften zwischen Polyolefin und entsprechend behandeltem Festkörper sowie deren Verträglichkeit. So weisen beispielsweise mit Glasfasern verstärkte Polyolefine erheblich bessere Eigenschaffen auf, wenn die verwendete Glasfaser mit einer Schlichte, die die erfindungsgemäße wäßrige Dispersion enthält, behandelt wurde.

Gegenstand der Erfindung sind wäßrige Dispersionen bestehend aus
a) 40 bis 95 Gew.-% Wasser,
b) 4 bis 60 Gew.-% emulgiertem Polyolefin aus
   b1) 60 bis 95 Gew.-%, bezogen auf (b), säuregruppenmodifiziertem Polyolefin
   b2) 10 bis 40 Gew.-%, bezogen auf (b), Emulgator und
   b3) 1 bis 7 Gew.-%, bezogen auf (b), Base,
c) 0,1 bis 15 Gew.-% Metallsalzen von Phosphorsäureestern der allgemeinen Formel (I) 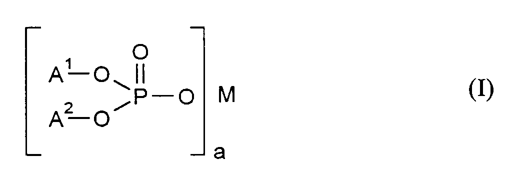 wobei
   - A¹ und A²: unabhängig voneinander einen monofunktionellen Kohlenwasserstoffrest mit 8 bis 40 Kohlenstoffatomen oder zusammen einen difunktionellen Kohlenwasserstoffrest mit 16 bis 80 Kohlenstoffatomen,
   - a: eine Zahl von 1 bis 3 und
   - M: a-wertiges Metallion bedeuten und
d) 0 bis 10 weiteren Zusatz- und Hilfsmitteln.

Ein weiterer Gegenstand der Erfindung ist ein Verfahren zur Herstellung der erfindungsgemäßen wäßrigen Dispersionen, welches dadurch gekennzeichnet ist, daß
a) 40 bis 95 Gew.-% Wasser
b) 4 bis 60 Gew.-% emulgierbare Zusammensetzung aus
   b1) 60 bis 95 Gew.-%, bezogen auf (b), säuregruppenmodifiziertem Polyolefin
   b2) 10 bis 40 Gew.-%, bezogen auf (b), Emulgator und
   b3) 1 bis 7 Gew.-%, bezogen auf (b), Base,
c) 0,1 bis 15 Gew.-% Metallsalze von Phosphorsäureestern der allgemeinen Formel (I) 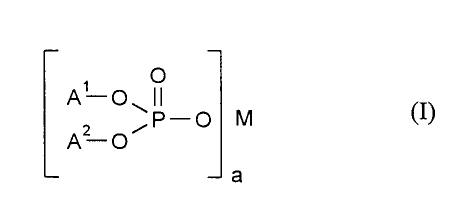 wobei
   - A¹, A², a und M: den oben genannten Bedeutungen entsprechen und
d) 0 bis 10 Gew.-% weitere Zusatz- und Hilfsmittel
zusammen gegeben werden und dann auf Temperaturen zwischen 60° und 200°C, vorzugsweise 90° und 190°C erhitzt und anschließend abgekühlt werden.

Da die Metallsalze der Phosphorsäureester der Formel (I) ausschließlich in mäßig polaren Lösungsmitteln löslich sind und in Polyolefinen unlöslich, war nicht zu erwarten, daß die Kombination dieser Metallsalze mit den emulgierbaren Polyolefinen eine wäßrige Dispersion ergeben. Die Komponenten a), b1) bis b3), c) und gegebenenfalls d) werden zusammengegeben, danach erhitzt und wieder abgekühlt, wobei eine feinteilige, wäßrige Dispersion erhalten wird.

Die erfindungsgemäßen Dispersionen werden zur Oberflächenmodifizierung von Feststoffen, insbesondere als Schlichtekomponente zur Beschlichtung von Glasfasern verwendet. Bevorzugt werden sie in Schlichten eingesetzt, die vor dem Auftrag auf die Glasfaser
1) 2 bis 20 Gew.-%, bevorzugt 4 bis 10 Gew.-% an Feststoff der erfindungsgemäßen wäßrigen Dispersion,
2) 0 bis 20 Gew.-%, vorzugsweise 0 bis 10 Gew.-% an Feststoff von Polyolefin-, Polyepoxid-, Polyester-, Polyvinylacetat- oder Polyurethan-Filmbildnern oder deren Gemischen
3) 0,1 bis 10 Gew.-, bevorzugt 0,3 bis 2 Gew.-% organofunktionelle Silane,
4) 0 bis 10 Gew.-%, bevorzugt 0,1 bis 5 Gew.-% weitere übliche Schlichtebestandteile und
5) Wasser als Rest auf 100 Gew.-% enthalten.

Die säuregruppenmodifizierten Polyolefine b1) sind chemisch modifizierte, d.h. Carbonsäuregruppen enthaltende, kristalline bzw. amorphe Polyolefine, wie sie beispielsweise in US 3 433 777 und US 3 480 580 beschrieben sind. Bevorzugt sind Carbonsäuregruppen enthaltende, kristalline bzw. amorphe Polypropylene. Die chemische Modifizierung der Polyolefine umfaßt in der Regel die Umsetzung des Polyolefins mit einer ungesättigten Carbonsäure und/oder Polycarbonsäure bzw. deren Anhydriden, Chloriden, Amiden oder Estern. Beispiele derartiger Säuren bzw. Anhydride sind Maleinsäure, Fumarsäure, Itaconsäure, Acrylsäure, Methacrylsäure, Muconsäure, Crotonsäure, Maleinsäureanhydrid, Itaconsäureanhydrid usw. Bevorzugt ist die Modifizierung mit Maleinsäureanhydrid. Ein Beispiel für ein verwendbares, mit Maleinsäureanhydrid modifiziertes Polypropylen ist das kommerziell unter dem Handelsnamen Epolene® E 43 verfügbare Handelsprodukt der Firma Eastman Chemical (Deutschland) GmbH. Die säuregruppenmodifizierten Polyolefine b1) werden in einer Menge von 60 bis 95 Gew.-%, vorzugsweise 70 bis 85 Gew.-%, bezogen auf emulgierbares Polyolefin b) eingesetzt.

Bei den Emulgatoren b2) handelt es sich im allgemeinen um anionische, kationische oder neutrale niedermolekulare, oligomere oder polymere Emulgatoren, Tenside oder Schutzkolloide, die in einer Menge von 10 bis 40 Gew.-%, vorzugsweise 15 bis 25 Gew.-% bezogen auf emulgierbares Polyolefin b) eingesetzt werden.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, Alkylethersulfonate wie Ether von α-Sulfo-ω-hydroxy-polyethylenglykolen mit z.B. 1-Methylphenylethylphenol, Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren bzw. polymeren Emulgatoren oder Tensiden sind die Salze von langkettige Alkanreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättigte oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und gegebenenfalls propoxylierter Butyldiglykol oder ethoxylierte Alkylarylether wie ethoxyliertes geradkettiges und/oder verzweigtes Nonylphenol oder Octylphenol oder benzyliertes p-Hydroxybiphenyl.

Geeignet als Emulgatoren oder Tenside sind weiterhin ethoxylierte langkettige Alkyl- oder Alkenylamine, Lecithin, mit langkettigen Alkylisocyanaten modifizierte Umsetzungsprodukte aus Polyethylenglykolen und Diisocyanaten, Umsetzungsprodukte von Rapsöl und Diethanolamin oder ethoxylierte Umsetzungsprodukte aus Sorbitan und langkettigen Alkan- oder Alkencarbonsäuren.

Geeignet sind schließlich sogenannte Schutzkolloide, wie z.B. Polyvinylalkohole oder wasserlösliche Cellulosederivate wie Methylcellulose.

Als Base b3) sind Alkalihydroxide wie z.B. Natrium- oder Kaliumhydroxid oder tert. Amine wie z.B. Trietylamin oder N,N-Dimethylethanolamin geeignet. Die Basen werden bezogen auf b) in einer Menge von 1 bis 7 Gew.-%, vorzugsweise 2 bis 5 Gew.-% eingesetzt.

Rezepturen von Polyolefin-Emulsionen und ihre Herstellung sind dem Fachmann (z.B. aus US 3 480 580) bekannt und zudem detailliert in der Veröffentlichung Nr. F-302 der Firma Eastman Chemical Products, Inc. beschrieben.

Die Metallsalze der Phosphorsäureester c) sind Verbindungen der allgemeinen Formel (I) 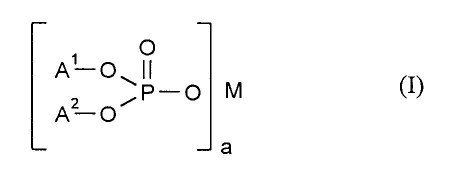 wobei
- A¹ und A²: unabhängig voneinander einen monofunktionellen Kohlenwasserstoffrest mit 8 bis 40 Kohlenstoffatomen oder zusammen einen difunktionellen Kohlenwasserstoffrest mit 16 bis 80 Kohlenstoffatomen
- a: eine Zahl von 1 bis 3 und
- M: ein a-wertiges Metallion bedeuten.

Metallionen sind z.B. Alkaliionen wie Natrium- und Kaliumionen, Erdalkaliionen wie Magnesium- oder Calciumionen oder andere Metallionen wie Aluminiumionen.

Bevorzugt handelt es sich um Verbindungen der allgemeinen Formel (II) 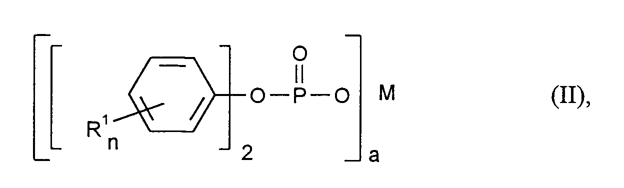 wobei
- R¹: einen Alkylrest mit 2 bis 12 Kohlenstoffatomen, besonders bevorzugt einen tert. Butylrest,
- n: 1 oder 2,
- a: 1 bis 3 und
- M: ein a-wertiges Metallion bedeutet oder
um Verbindungen der allgemeinen Formel (III) 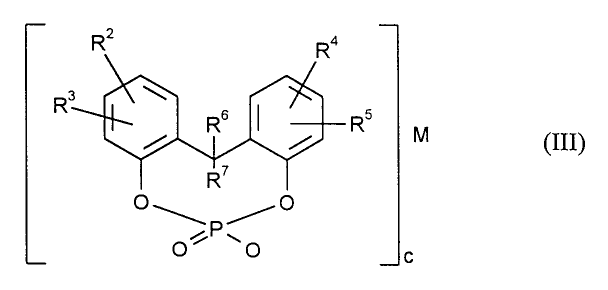 wobei
- R² bis R⁵: unabhängig von einander Alkylreste mit 2 bis 12 Kohlenstoffatomen, besonders bevorzugt tert. Butylreste in 4- und 6-Stellung,
- a: 1 bis 3 und
- M: ein a-wertiges Metallion und
- R⁶, R⁷: unabhängig voneinander ein Wasserstoffatom oder einen Methylrest bedeuten.

Ganz besonders bevorzugt ist Natrium-2,2'-methylenbis(4,6-di-tert.butylphenyl)phosphat.

Metallsalze der Phosphorsäureester sind in der wäßrigen Dispersion in einer Menge von 0,1 bis 15 Gew.-%, vorzugsweise 1 bis 7 Gew.-% enthalten.

Als weitere Zusatz- und Hilfsmittel kommen vorzugsweise Emulgatoren, Tenside oder Schutzkolloide der vorgenannten Art und Gleitmittel, Alterungsschutzmittel, Oxidationsschutzmittel usw. in Betracht.

Die Herstellung der erfindungsgemäßen wäßrigen Dispersionen erfolgt bevorzugt, indem die Komponenten a) bis d) zusammengegeben und auf Temperaturen zwischen 60° und 200°C, vorzugsweise 90° und 190°C erhitzt und anschließend abgekühlt werden. Die Temperatur wird vorzugsweise so gewählt, daß das modifizierte Polyolefin (b1) bei der gewählten Temperatur schmilzt. Besonders bevorzugt wird eine Temperatur gewählt, die ca. 20°C oberhalb des Schmelzpunktes des modifizierten Polyolefins (b1) liegt. Die Durchführung des Verfahrens an sich entspricht der bekannten Verfahrensweise, wie sie zur Herstellung von Polyolefin-Emulsionen im allgemeinen angewendet wird. Einzelheiten zum Verfahren sind beispielsweise in der Veröffentlichung Nr. F-302 der Firma Eastman Chemical Products, Inc. beschrieben.

Die erfindungsgemäßen wäßrigen Dispersionen können zur Oberflächenmodifizierung von Feststoffen, wie z.B. Calciumcarbonat, Talkum, Kieselgel, Bariumsulfat, Calciumsulfat, Kaolin, Bentonit, Eisenoxiden, Titandioxid, Zeolithen, Wollastonit, Dolomit, Zinkoxid, Magnesiumcarbonat, Molybdendisulfid, Glas und Quarz verwendet werden. Sie werden bevorzugt zur Beschlichtung von Glasfasern eingesetzt.

Das Beschlichten von Glasfasern ist dem Fachmann an sich bekannt. Die erfindungsgemäßen Schlichten enthalten zusammen mit den erfindungsgemäßen, wäßrigen Dispersionen weitere Bindemittel, Haftvermittler, Gleitmittel und Hilfsstoffe wie Netzmittel und Antistatika. Die Bindemittel, Haftvermittler, Gleitmittel und Hilfsstoffe, das Verfahren zur Herstellung der Schlichte, das Verfahren zur Beschlichtung der Glasfaser sind bekannt und bespielsweise in K.L. Loewenstein, "The Manufacturing Technology of Continuous Glass Fibres", Elsevier Scientific Publishing Corp., Amsterdam, London, New York, 1983 beschrieben.

Bevorzugt enthält die erfindungsgemäße Schlichte vor dem Auftrag auf die Glasfaser
1) 2 bis 20 Gew.-%, bevorzugt 4 bis 10 Gew.-% an Feststoff der erfindungsgemäßen, wäßrigen Dispersion,
2) 0 bis 20 Gew.-%, vorzugsweise 0 bis 10 Gew.-% an Feststoff von Polyolefin-, Polyepoxid-, Polyester-, Polyvinylacetat- oder Polyurethan-Filmbildnern oder deren Gemischen,
3) 0,1 bis 10 Gew.-%, bevorzugt 0,3 bis 2 Gew.-% organofunktionelle Silane,
4) 0 bis 10 Gew.-%, bevorzugt 0,1 bis 5 Gew.-% weitere übliche Schlichtebestandteile und
5) Wasser als Rest auf 100 Gew. -%.

Durch Verwendung der erfindungsgemäßen Dispersionen zur Oberflächenmodifizierung von Feststoffen, insbesondere zur Beschlichtung von Glasfasern wird die Verträglichkeit zwischen den Feststoffen und dem Matrixolefin erhöht und die Verbundeigenschaften verbessert.

Die vorliegende Erfindung soll anhand der nachfolgenden Beispiele näher erläutert werden.

### Beispiel 1 (Herstellung einer erfindungsgemäßen wäßrigen Zusammensetzung)

216,0 g mit Maleinsäure modifiziertes Polypropylen (Epolene® E 43, Handelsprodukt der Firma Eastman Chemical (Deutschland) GmbH), 12,0 g Natrium-2,2'-methylenbis(4,6-di-tert.butylphenyl)phosphat, 54,0 g mit 10 Mol Ethylenoxid ethoxyliertes Nonylphenol, 10,2 g Kaliumhydroxid und 1655,8 ml Wasser werden in einem Autoklaven auf 170°C erhitzt, 60 Minuten bei der Temperatur gerührt und auf 25°C abgekühlt. Die resultierende, wäßrige Dispersion wird durch ein 50 µm-Nylongewebe filtiert. Es verbleibt kein Rückstand. Man erhält eine feinteilige, unbegrenzt lagerfähige, wäßrige Dispersion mit einem pH-Wert von 7 und einer Viskosität von 5 mPas.

### Beispiel 2 (Verwendung der erfindungsgemäßen wäßrigen Dispersion und bekannter Dispersionen in Schlichten zur Beschlichtung von Glasfasern)

Die in der Tabelle 1 beschriebenen Schlichten werden über einen Kiss-rollapplikator auf Glasfasern mit einem Durchmesser von 14 µm aufgebracht. Die Glasfasern werden zu Cakes (Bobinen) gewickelt und anschließend 10 Stunden bei 130°C getrocknet. Die Glasfasern werden nach der Trocknung in 4,5 mm lange Chops geschnitten.

### Beispiel 3 (Einarbeitung der beschlichteten Glasfasern in Polyolefine)

Die in Tabelle 2 aufgeführten Komponenten werden auf einem Extruder bei einer Extrudertemperatur von 250°C zu einer Formmasse extrudiert und granuliert. Von den Formmassen werden auf einer üblichen Spritzgußmaschine 80 x 10 x 4 mm-Prüfstäbe und Zugstäbe hergestellt. Geprüft werden Biegefestigkeit nach DIN 53 452, Zugfestigkeit nach DIN 53 455 sowie die Schlagzähigkeit bei Raumtemperatur nach Izod (ISO 180/IC).

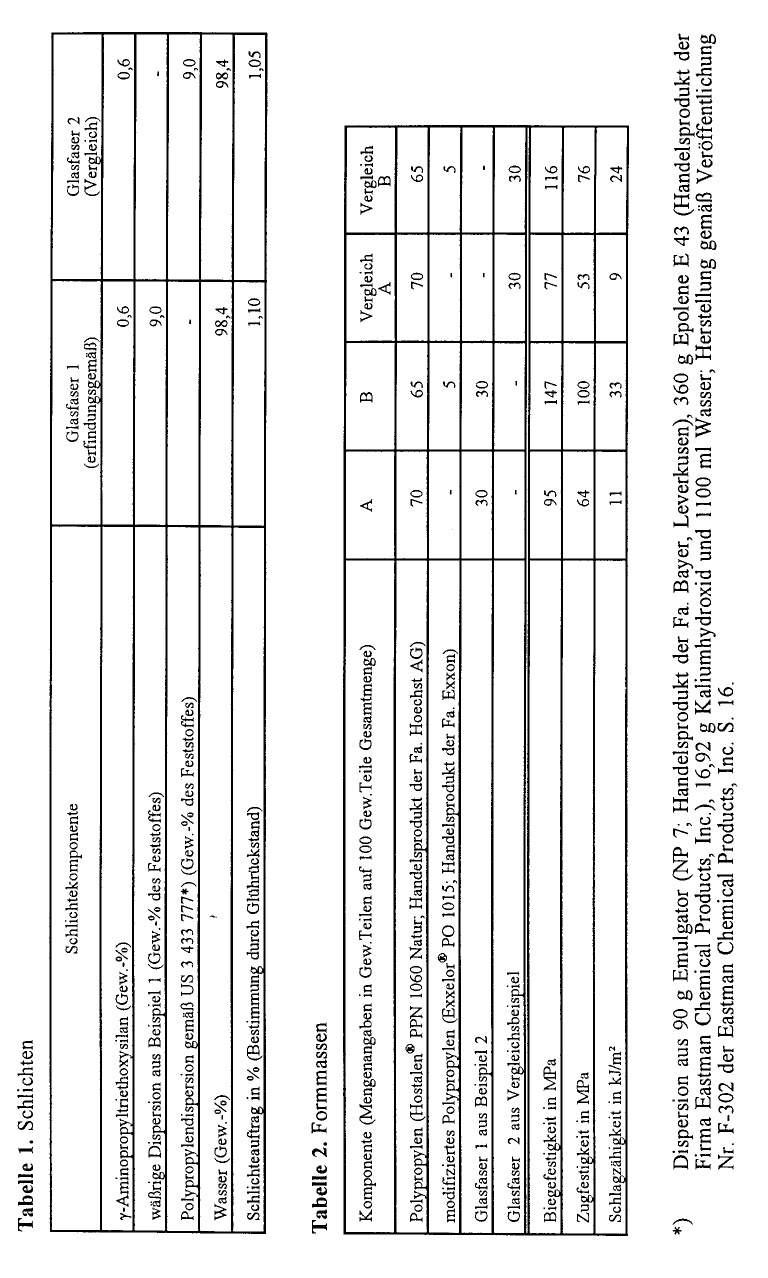

## Patentansprüche

1. Wäßrige Dispersion bestehend aus
a) 40 bis 95 Gew.-% Wasser,
b) 4 bis 60 Gew.-% emulgiertem Polyolefin aus
b1) 60 bis 95 Gew.-%, bezogen auf (b), säuregruppenmodifiziertem Polyolefin
b2) 10 bis 40 Gew.-%, bezogen auf (b), Emulgator und
b3) 1 bis 7 Gew.-%, bezogen auf (b), Base,
c) 0,1 bis 15 Gew.-% Metallsalzen von Phosphorsäureestern der allgemeinen Formel (I) 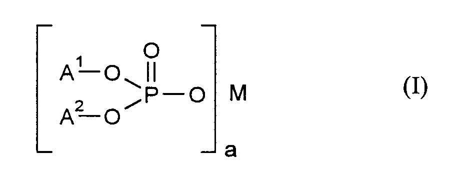 wobei
A¹ und A² unabhängig voneinander einen monofunktionellen Kohlenwasserstoffrest mit 8 bis 40 Kohlenstoffatomen oder zusammen einen difunktionellen Kohlenwasserstoffrest mit 16 bis 80 Kohlenstoffatomen,
a eine Zahl von 1 bis 3 und
M ein a-wertiges Metallion bedeuten und
d) 0 bis 10 Gew.-% weiteren Zusatz- und Hilfsmitteln.

2. Wäßrige Dispersion gemäß Anspruch 1, dadurch gekennzeichnet, daß das Metallsalz des Phosphorsäureesters Natrium-2,2'methylenbis(4,6-di-tert.-butylenphenyl)phosphat ist.

3. Verfahren zur Herstellung der wäßrigen Dispersion gemäß Anspruch 1 bis 2, dadurch gekennzeichnet, daß
a) 40 bis 95 Gew.-% Wasser,
b) 4 bis 60 Gew.-% emulgierbare Zusammensetzung aus
b1) 60 bis 95 Gew.-%, bezogen auf (b), säuregruppenmodifiziertem Polyolefin
b2) 10 bis 40 Gew.-%, bezogen auf (b), Emulgator und
b3) 1 bis 7 Gew.-%, bezogen auf (b), Base,
c) 0,1 bis 15 Gew.-% Metallsalze von Phosphorsäureestern der allgemeinen Formel (I) 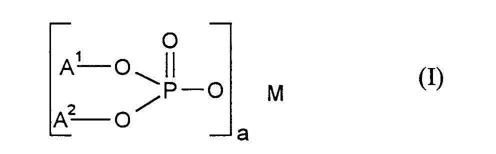 wobei
A¹ und A² unabhängig voneinander einen monofunktionellen Kohlenwasserstoffrest mit 8 bis 40 Kohlenstoffatomen oder zusammen einen difunktionellen Kohlenwasserstoffrest mit 16 bis 80 Kohlenstoffatomen,
a eine Zahl von 1 bis 3 und
M ein a-wertiges Metallion bedeuten und
d) 0 bis 10 Gew.-% weitere Zusatz- und Hilfsmittel
zusammengegeben werden und anschließend auf Temperaturen zwischen 60°C und 200°C, vorzugsweise 90 bis 190°C, erhitzt und danach abgekühlt werden.

4. Verwendung der wäßrigen Dispersion gemäß Anspruch 1 und 2 zur Oberflächenmodifizierng von Feststoffen.

5. Verwendung der wäßrigen Dispersion gemäß Anspruch 1 und 2 als Schlichtekomponente in Glasfaserschlichten.

6. Verwendung der wäßrigen Dispersion gemäß Anspruch 1 und 2 zur Beschlichtung von Glasfasern, wobei die Schlichte vor dem Auftrag auf die Glasfaser
1) 2 bis 20 Gew.-%, bevorzugt 4 bis 10 Gew.-% an Feststoff der wäßrigen Dispersion gemäß Anspruch 1 und 2,
2) 0 bis 20 Gew.-%, vorzugsweise 0 bis 10 Gew.-% an Feststoff von Polyolefin-, Polyepoxid-, Polyester-, Polyvinylacetat- oder Polyurethan-Filmbildnern oder deren Gemische
3) 0,1 bis 10 Gew.-%, bevorzugt 0,3 bis 2 Gew.-% organofunktionelle Silane,
4) 0 bis 10 Gew.-%, bevorzugt 0,1 bis 5 Gew.-% weitere übliche Schlichtebestandteile und
5) Wasser als Rest auf 100 Gew.-% enthält.

7. Verwendung der wäßrigen Dispersion gemäß Anspruch 1 und 2 zur Herstellung von Feststoffen enthaltenden, insbesondere beschichtete Glasfasern enthaltenden Polyolefinen.

## Claims

1. Aqueous dispersion consisting of
a) 40 to 95 wt.% of water,
b) 4 to 60 wt.% of emulsified polyolefin prepared from
b1) 60 to 95 wt.%, relative to (b), of polyolefin modified with acid groups
b2) 10 to 40 wt.%, relative to (b), of emulsifier and
b3) 1 to 7 wt.%, relative to (b), of base,
c) 0.1 to 15 wt.% of metal salts of phosphoric acid esters of the general formula (I) 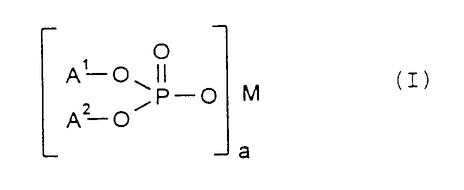 wherein
A¹ and A² mutually independently represent a monofunctional hydrocarbon residue with 8 to 40 carbon atoms or together represent a difunctional hydrocarbon residue with 16 to 80 carbon atoms,
a represents a number from 1 to 3 and
M represents an a-valent metal ion and
d) 0 to 10 wt.% of further additives and auxiliary substances.

2. Aqueous dispersion according to claim 1, characterised in that the metal salt of the phosphoric acid ester is sodium 2,2'-methylenebis(4,6-di-tert.-butylenephenyl) phosphate.

3. Process for the production of the aqueous dispersion according to claims 1 to 2, characterised in that
a) 40 to 95 wt.% of water,
b) 4 to 60 wt.% of emulsifiable polyolefin prepared from
b1) 60 to 95 wt.%, relative to (b), of polyolefin modified with acid groups
b2) 10 to 40 wt.%, relative to (b), of emulsifier and
b3) 1 to 7 wt.%, relative to (b), of base,
c) 0.1 to 15 wt.% of metal salts of phosphoric acid esters of the general formula (I) 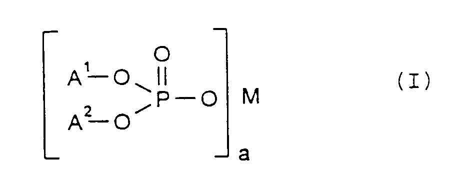 wherein
A¹ and A² mutually independently represent a monofunctional hydrocarbon residue with 8 to 40 carbon atoms or together represent a difunctional hydrocarbon residue with 16 to 80 carbon atoms,
a represents a number from 1 to 3 and
M represent an a-valent metal ion and
d) 0 to 10 wt.% of further additives and auxiliary substances
are combined and then heated to temperatures of between 60°C and 200°C, preferably 90 to 190°C and are subsequently cooled.

4. Use of the aqueous dispersion according to claims 1 and 2 for the surface modification of solids.

5. Use of the aqueous dispersion according to claims 1 and 2 as a size component in glass fibre sizes.

6. Use of the aqueous dispersion according to claims 1 and 2 for sizing glass fibres, wherein, before application onto the glass fibres, the size contains
1) 2 to 20 wt.%, preferably 4 to 10 wt.% of solids of the aqueous dispersion according to claims 1 and 2,
2) 0 to 20 wt.%, preferably 0 to 10 wt.% of solids of polyolefin, polyepoxide, polyester, polyvinyl acetate or polyurethane film formers or mixtures thereof
3) 0.1 to 10 wt.%, preferably 0.3 to 2 wt.% of organo-functional silanes,
4) 0 to 10 wt.%, preferably 0.1 to 5 wt.% of further conventional size constituents and
5) water to make up to 100 wt.%.

7. Use of the aqueous dispersion according to claims 1 and 2 for the production of polyolefins containing solids, in particular containing sized glass fibres.

## Revendications

1. Dispersion aqueuse consistant en
a) 40 à 95 % en poids d'eau,
b) 4 à 60 % en poids d'une polyoléfine émulsionnée consistant elle-même en
b1) 60 à 95 % en poids, par rapport à b), d'une polyoléfine modifiée par des groupes acides,
b2) 10 à 40 % en poids, par rapport à b), d'un agent émulsionnant et
b3) 1 à 7 % en poids, par rapport à b), d'une base,
c) 0,1 à 15 % en poids de sels métalliques d'esters phosphoriques de formule générale I 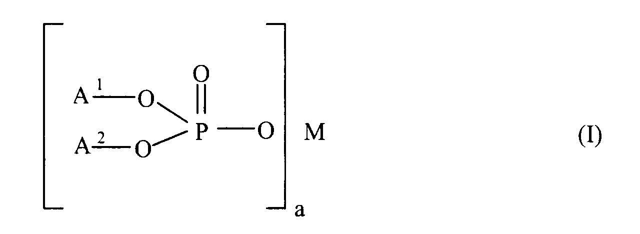 dans laquelle
A¹ et A² représentent chacun, indépendamment l'un de l'autre, un radical hydrocarboné monofonctionnel contenant 8 à 40 atomes de carbone ou forment ensemble un radical hydrocarboné difonctionnel contenant 16 à 80 atomes de carbone,
a est un nombre allant de 1 à 3 et
M représente un ion métallique de valence a, et
d) 0 à 10 % en poids d'autres additifs et produits auxiliaires.

2. Dispersion aqueuse selon la revendication 1 caractérisée en ce que le sel métallique d'ester phosphorique est le 2,2'-méthylènebis-(4,6-di-tert-butylènephényl)phosphate de sodium.

3. Procédé de préparation de la dispersion aqueuse selon les revendications 1 à 2, caractérisée en ce que l'on mélange
a) 40 à 95 % en poids d'eau,
b) 4 à 60 % en poids d'une composition émulsionnable consistant elle-même en
b1) 60 à 95 % en poids, par rapport à b), d'une polyoléfine modifiée par des groupes acides,
b2) 10 à 40 % en poids, par rapport à b), d'un agent émulsionnant et
b3) 1 à 7 % en poids, par rapport à b), d'une base
c) 0,1 à 15 % en poids de sels métalliques d'esters phosphoriques de formule générale I 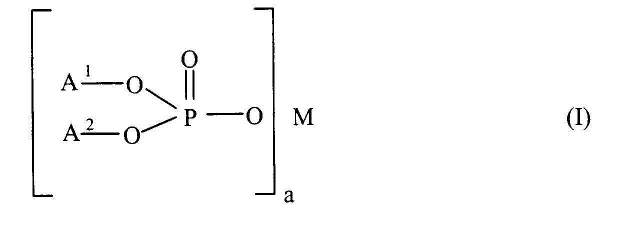 dans laquelle
A¹ et A² représentent chacun, indépendamment l'un de l'autre, un radical hydrocarboné monofonctionnel contenant 8 à 40 atomes de carbone ou forment ensemble un radical hydrocarboné difonctionnel contenant 16 à 80 atomes de carbone,
a est un nombre allant de 1 à 3 et
M représente un ion métallique de valence a et
d) 0 à 10 % en poids d'autres additifs et produits auxiliaires,
puis on chauffe à des températures de 60 à 200°C, de préférence de 90 à 190°C après quoi on refroidit.

4. Utilisation de la dispersion aqueuse selon les revendications 1 et 2 pour la modification en surface de matières solides.

5. Utilisation de la dispersion aqueuse selon les revendications 1 et 2 en tant que composant actif de produits d'ensimage pour fibres de verre.

6. Utilisation de la dispersion aqueuse selon les revendications 1 et 2, pour l'ensimage de fibres de verre, le produit d'ensimage contenant, avant l'application sur les fibres de verre,
1) 2 à 20 % en poids, de préférence 4 à 10 % en poids, de matières solides de la dispersion aqueuse selon les revendications 1 et 2,
2) 0 à 20 % en poids, de préférence 0 à 10 % en poids, de matières solides d'agents filmogènes des types polyoléfine, polyépoxyde, polyester, acétate de polyvinyle ou polyuréthane, ou leurs mélanges,
3) 0,1 à 10 % en poids, de préférence 0,3 à 2 % en poids, de silanes organofonctionnels,
4) 0 à 10 % en poids, de préférence 0,1 à 5 % en poids, d'autres constituants usuels des produits d'ensimage et
5) de l'eau pour le complément à 100 % en poids.

7. Utilisation de la dispersion aqueuse selon les revendications 1 et 2 pour la fabrication de polyoléfines contenant des matières solides, en particulier de polyoléfines contenant des fibres de verre revêtues.
